# EUROPÄISCHE PATENTSCHRIFT

(11) **EP 0 667 468 B1**
(45) Veröffentlichungstag und Bekanntmachung des Hinweises auf die Patenterteilung: **21.05.1997**
(21) Anmeldenummer: 94117516.8
(22) Anmeldetag: 07.11.1994
(51) Int. Cl.: F16F 15/126, F16F 1/36

(54) **Torsionsschwingungsdämpfer**
Torsional vibration damper
Dispositif amoritisseur de torsion

(30) Priorität: 11.02.1994 DE 4404311
(43) Veröffentlichungstag der Anmeldung: 16.08.1995
(73) Patentinhaber: Firma Carl Freudenberg, D-69469 Weinheim (DE)
(72) Erfinder: Eichhorn, Jürgen, D-69469 Weinheim (DE); Schmitt, Kurt, D-64658 Fürth (DE)

(56) Entgegenhaltungen:
- DE-A- 4 018 596
- FR-A- 2 442 991
- GB-A- 2 233 424
- US-A- 3 399 103
- US-A- 3 901 101

## Beschreibung

Die Erfindung betrifft einen Torsionsschwingungsdämpfer gemäß Oberbegriff des Anspruchs 1.

Ein solcher Torsionsschwingungsdämpfer ist aus der DE 40 18 596 C2 bekannt. Der Torsionsschwingungsdämpfer ist als drehelastische Kupplung ausgebildet, wobei die Riemenscheibe in radialer Richtung durch eine Gleitlager-Buchse an einem der Ringe abgestützt ist. Die Gleitlagerung bedingt eine gute Relativbeweglichkeit der beiden gegeneinander abgestützten Teile zueinander und eine exakte räumliche Zuordnung während einer langen Gebrauchsdauer.

Der Erfindung liegt die Aufgabe zugrunde, einen Torsionsschwingungsdämpfer der vorbekannten Art derart weiterzuentwickeln, daß die Dämpfungseigenschaften der Gleitlager-Abstützung verbessert werden, daß das Gleitlager einfach und kostengünstig herstellbar ist und gute Gebrauchseigenschaften während einer langen Gebrauchsdauer aufweist.

Diese Aufgabe wird erfindungsgemäß mit den Merkmalen von Anspruch 1 gelöst. Auf vorteilhafte Ausgestaltungen nehmen die Unteransprüche Bezug.

Bei der Erfindung ist von Vorteil, daß die Riemenscheibe durch den Führungsring in radialer Richtung einerseits und durch den zweiten Federkörper aus elastomeren Werkstoff in radialer Richtung andererseits völlig schwingungsentkoppelt innerhalb des Torsionsschwingungsdämpfers angeordnet ist und daher auch im Resonanzdurchgang unerwünschte Riemengeräusche sicher vermieden werden. Um sowohl gute Gebrauchseigenschaften der Riemenscheibe auf dem Führungsring als auch einen möglichst geringen abrasiven Verschleiß zu gewährleisten und dadurch eine stabile Lagerung sicher zu stellen, ist es vorgesehen, daß innerhalb des Führungsrings Teilkörper eingelagert sind, die diese vorteilhaften Gebrauchseigenschaften bewirken. Die Teilkörper werden vor dem Vulkanisieren des Führungsrings in den Rohgummi eingebracht. Durch die vergleichsweise hohe mechanische Widerstandsfähigkeit der Partikel ist eine ausgezeichnet Formbeständigkeit des Führungsrings während einer langen Gebrauchsdauer gewährleistet.

Gemäß einer ersten Ausgestaltung können die Teilkörper durch metallische Partikel einer Kupferlegierung gebildet sein. Die Partikel können beispielsweise eine Werkstoffzusammensetzung aufweisen, die dem Werkstoff von metallischen Gleitlagerbuchsen entspricht. Ferner besteht die Möglichkeit, daß die Teilkörper durch Graphitpartikel gebildet sind. Hierbei ist von Vorteil, daß durch das Graphit ausgezeichnete Gleiteigenschaften während der gesamten Gebrauchsdauer des Torsionsschwingungsdämpfers zwischen der Riemenscheibe und dem Führungsring erhalten bleiben.

Außerdem besteht die Möglichkeit, daß die Teilkörper durch Kunststoffpartikel gebildet sind und beispielsweise aus PTFE bestehen. Die Kunststoffpartikel bewirken einen ausgezeichneten Kompromiß zwischen einer guten Gleitfähigkeit der einander zugewandten Oberflächen von Führungsring und Riemenscheibe aufeinander und deren exakte räumliche Zuordnung während einer langen Gebrauchsdauer auch dann, wenn der Torsionsschwingungsdämpfer erhöhten Temperaturen, beispielsweise im Motorraum eines Kraftfahrzeugs, ausgesetzt ist.

Nach einer vorteilhaften Ausgestaltung können die Partikel im wesentlichen kugelförmig ausgebildet sein und einen Durchmesser von 25 µm bis 500 µm aufweisen. Für die meisten Anwendungsfälle von Torsionsschwingungssdämpfern sind Partikeldurchmesser innerhalb dieses Durchmesserbereichs besonders gut geeignet. Davon abweichende Formen, beispielsweise gemahlene Werkstoffe mit unregelmäßigen Umfangskonturen sind ebenfalls verwendbar und bieten im Hinblick auf eine kostengünstige Herstellbarkeit des gesamt Torsionsschwingungsdämpfers Vorteile.

Die Partikel können eine im wesentlichen homogene Verteilung innerhalb des Führungsrings aufweisen. Hierbei ist von Vorteil, daß sich die Partikel, die vom elastomeren Werkstoff des Führungsrings jeweils vollständig umschlossen sind, bei Belastung durch die Riemenscheibe gegenseitig stützen. Relaxationserscheinungen des elastomeren Werkstoffs vermögen dadurch die stabile und taumelfreie Lagerung der Riemenscheibe nicht zu beeinträchtigen.

Der Führungsring kann aus 10 bis 90, bevorzugt aus 30 bis 75 Volumen % Partikeln bestehen. Hierbei ist von Vorteil, daß im Bereich der Oberfläche des Führungsrings, die der Riemenscheibe zugewandt ist, eine ausreichend große Anzahl von Partikeln eingelagert ist, die eine gegen abrasiven Verschleiß widerstandsfähige Gleitschicht bilden. Durch die vollständige Ummantelung der einzelnen Partikel weist der Führungsring neben guten Gleiteigenschaften gute schwingungsisolierende Eigenschaften auf.

Der Führungsring und der erste Federkörper können einstückig ineinander übergehend ausgebildet sein, wobei nur im Führungsring Partikel eingelagert sind.

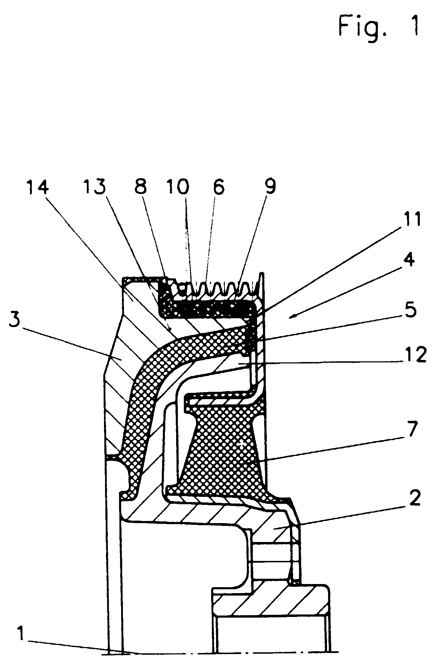

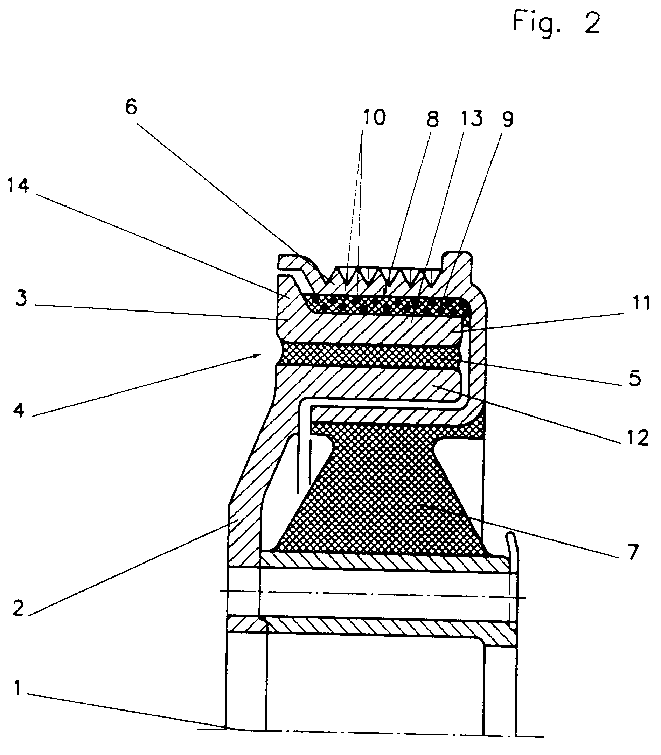

Zwei Ausführungsbeispiele des erfindungsgemäßen Torsionsschwingungsdämpfers sind in den Fig. 1 und 2 dargestellt und werden im folgenden näher beschrieben.

In Fig. 1 ist ein erstes Ausführungsbeispiel des erfindungsgemäßen Torsionsschwingungsdämpfers gezeigt, bei dem der erste Federkörper und der Führungsring einstückig ineinanderübergehend ausgebildet sind.

In Fig. 2 ist eine zweites Ausführungsbeispiel des beanspruchten Torsionsschwingungsdämpfers gezeigt, ähnlich dem Ausführungsbeispiel aus Fig. 1, wobei die Federkörper und der Führungsring getrennt voneinander ausgebildet sind.

In Fig. 1 ist ein Torsionsschwingungsdämpfer gezeigt, der zum Antrieb von Nebenaggregaten an die Kurbelwelle einer hier nicht dargestellten Verbrennungskraftmaschine anflanschbar ist. Der Torsionsschwingungsdämpfer umfaßt zwei konzentrisch zueinander angeordnete Ringe 2, 3, die eine gemeinsame Rotationsachse 1 umschließen. Der erste Ring 2 ist als Nabenring ausgebildet und weist einen im wesentlichen S-förmigen Querschnitt auf. Der zweite Ring 3 ist im wesentlichen topfförmig gestaltet und umschließt den ersten Ring 2 allseitig mit radialem Abstand. In dem durch die beiden Ringe 2, 3 gebildeten Ringspalt 4 ist ein erster Federkörper 5 aus gummielastischem Werkstoff einvulkanisiert, der die beiden Ringe 2, 3 drehelastisch aneinander festlegt. In diesem Ausführungsbeispiel ist es vorgesehen, daß die Riemenscheibe 6 durch einen als Drehfeder ausgebildeten zweiten Federkörper 7 mit der ersten Ring 2 in Umfangsrichtung drehelastisch nachgiebig verbunden ist. Die Riemenscheibe 6 weist eine in axialer Richtung entgegen dem zweiten Ring 3 geöffnete, U-förmige Ausnehmung auf und umschließt sowohl die Stirnseite 11 des zweiten Rings 3 als auch die stirnseitige Begrenzung 12 des ersten Rings 2. Der zweite Ring 3 weist außenumfangsseitig auf der der Riemenscheibe zugewandten Seite ein Gleitlager 8 auf, das als Führungsring 9 ausgebildet ist und aus einem gummielastischen Werkstoff besteht. Der Führungsring 9 erstreckt sich vom ersten Federkörper 5 ausgehend um die Stirnseite 11 des zweiten Rings 3 entlang des Axialvorsprungs 13 des zweiten Rings 3 bis in den Bereich von dessen Radialflansch 14. In den Führungsring 9 sind Teilkörper 10 eingelagert, die in diesem Ausführungsbeispiel im wesentlichen kugelförmig ausgebildet sind und eine im wesentlichen homogene Verteilung innerhalb des Führungsrings 9 aufweisen. Durch diese Ausgestaltung ist die Riemenscheibe 6 vollständig schwingungsentkoppelt bezogen auf den ersten und den zweiten Ring 2, 3 innerhalb des Torsionsschwingungsdämpfers angeordnet. Durch die formstabilisierende Wirkung der Teilkörper ist eine präzise Lagerung der Riemenscheibe 6 auf dem Außenumfang des zweiten Rings 3 gegeben. Durch die eingelagerten Teilkörper 10 wird darüberhinaus eine ausgezeichnete Relativbeweglichkeit bei minimalem abrasivem Verschleiß bedingt. Sekundäre Schmiermittel sind daher entbehrlich. In dem hier gezeigten Ausführungsbeispiel ist die Riemenscheibe 6 sowohl in radialer als auch in axialer Richtung durch den Führungsring 9 und die innerhalb des Führungsrings 9 angeordneten Teilkörper 10 abgestützt.

In Fig. 2 ist ein zweites Ausführungsbeispiel des erfindungsgemäßen Torsionsschwingungsdämpfers gezeigt, das sich von dem Ausführungsbeispiel aus Fig. 1 im wesentlichen dadurch unterscheidet, daß der Führungsring 9 und der erste Federkörper 5 zweistückig ausgebildet sind. Der Führungsring 9 bildet für die Riemenscheibe 6 eine Gleitlagerung sowohl in radialer als auch in axialer Richtung. Die vorteilhaften Gebrauchseigenschaften des Führungsrings sind mit den Gebrauchseigenschaften aus Fig. 1 identisch.

### BEZUGSZEICHENLISTE

- 1: Rotationsachse
- 2: erster Ring
- 3: zweiter Ring
- 4: Ringspalt
- 5: erster Federkörper
- 6: Riemenscheibe
- 7: zweiter Federkörper
- 8: Gleitlager
- 9: Führungsring
- 10: Teilkörper
- 11: Stirnseite des zweiten Rings 3
- 12: stirnseitige Begrenzung des ersten Rings 2
- 13: Axialvorsprung des zweiten Rings 3
- 14: Radialflansch des zweiten Rings 3

## Patentansprüche

1. Torsionsschwingungsdämpfer mit einer Rotationsachse (1), umfassend einen ersten (2) und einen zweiten Ring (3), die einander mit radialem Abstand umschließen, wobei in dem durch den Abstand gebildeten Ringspalt (4) zumindest ein ringförmig ausgebildeter erster Federkörper (5) aus elastomerem Werkstoff angeordnet ist und wobei an zumindest einem der Ringe (2) eine Riemenscheibe (6) mittels eines zweiten Federkörpers (7) aus elastomerem Werkstoff relativ drehelastisch gelagert und an zumindest einem der Ringe (3) mittels eines Gleitlagers (8) zumindest in radialer Richtung abgestützt ist, das als Führungsring (9) ausgebildet ist, dadurch gekennzeichnet, daß der Führungsring (9) aus einem gummielastischen Werkstoff besteht und daß in dem Führungsring (9) verschleißreduzierende und formstabilisierende Teilkörper (10) eingelagert sind.

2. Torsionsschwingungsdämpfer nach Anspruch 1, dadurch gekennzeichnet, daß die Teilkörper (10) durch metallische Partikel einer Kupferlegierung gebildet sind.

3. Torsionsschwingungsdämpfer nach Anspruch 1, dadurch gekennzeichnet, daß die Teilkörper (10) durch Graphitpartikel gebildet sind.

4. Torsionsschwingungsdämpfer nach Anspruch 1, dadurch gekennzeichnet, daß die Teilkörper (10) durch Kunststoffpartikel gebildet sind.

5. Torsionsschwingungsdämpfer nach Anspruch 4, dadurch gekennzeichnet, daß die Kunststoffpartikel aus PTFE bestehen.

6. Torsionsschwingungsdämpfer nach Anspruch 2 bis 5, dadurch gekennzeichnet, daß die Partikel im wesentlichen kugelförmig ausgebildet sind und einen Durchmesser von 25 µm bis 500 µm aufweisen.

7. Torsionsschwingungsdämpfer nach Anspruch 2 bis 6, dadurch gekennzeichnet, daß die Partikel eine im wesentlichen homogene Verteilung innerhalb des Führungsrings (9) aufweisen.

8. Torsionsschwingungsdämpfer nach Anspruch 2 bis 7, dadurch gekennzeichnet, daß der Führungsring (9) aus 10 bis 90 Volumen % Partikeln besteht.

9. Torsionsschwingungsdämpfer nach Anspruch 1 bis 8, dadurch gekennzeichnet, daß der Führungsring (9) und der erste Federkörper (5) einstückig ineinanderübergehend ausgebildet sind und daß nur im Führungsring (9) Partikel eingelagert sind.

## Claims

1. A torsional vibration damper with an axis of rotation (1), comprising a first ring (2) and a second ring (3) which surround one another with a radial spacing, at least one first spring body (5) made of elastomeric material and of annular design being arranged in the annular gap (4) formed by the spacing, and a belt pulley (6) being mounted in a relatively torsionally elastic manner on at least one of the rings (2) by means of a second spring body (7) made of elastomeric material and being supported on at least one of the rings (3), at least in the radial direction, by means of a sliding bearing (8) designed as a guide ring (9), characterized in that the guide ring (9) is composed of a rubber-elastic material and in that wear-reducing and shape-stabilizing components (10) are embedded in the guide ring (9).

2. A torsional vibration damper according to claim 1, characterized in that the components (10) are formed by metallic particles of a copper alloy.

3. A torsional vibration damper according to claim 1, characterized in that the components (10) are formed by graphite particles.

4. A torsional vibration damper according to claim 1, characterized in that the components (10) are formed by plastics particles.

5. A torsional vibration damper according to claim 4, characterized in that the plastics particles are composed of PTFE.

6. A torsional vibration damper according to any of claims 2 to 5, characterized in that the particles are essentially of spherical design and have a diameter of from 25 µm to 500 µm.

7. A torsional vibration damper according to any of claims 2 to 6, characterized in that the particles have an essentially homogeneous distribution within the guide ring (9).

8. A torsional vibration damper according to any of claims 2 to 7, characterized in that the guide ring (9) is composed of 10 to 90% by volume of particles.

9. A torsional vibration damper according to any of claims 1 to 8, characterized in that the guide ring (9) and the first spring body (5) are designed in such a way as to merge integrally into one another and in that particles are embedded only in the guide ring (9).

## Revendications

1. Dispositif amortisseur de torsion avec un axe de rotation (1), comprenant une première (2) et une seconde bague (3) qui s'entourent avec une distance radiale, au moins un premier corps élastique (5) en matière élastomère exécuté de manière annulaire étant situé dans la fente annulaire (4) formée par la distance radiale et une poulie (6) étant montée sur au moins une des bagues (2) au moyen d'un second corps élastique (7) en matière élastomère de manière élastique permettant une torsion relative et étant appuyée, au moins en direction radiale, sur au moins une des bagues (3) au moyen d'un palier lisse (8) qui est exécuté en tant que bague de guidage (9), caractérisé en ce que la bague de guidage (9) est formée d'une matière de gomme élastique et en ce que des corps partiels (10) stabilisant la forme et réduisant l'usure sont intercalés dans la bague de guidage (9).

2. Dispositif amortisseur de torsion selon la revendication 1, caractérisé en ce que les corps partiels (10) sont formés par des particules métalliques d'un alliage cuivreux.

3. Dispositif amortisseur de torsion selon la revendication 1, caractérisé en ce que les corps partiels (10) sont formés par des particules de graphite.

4. Dispositif amortisseur de torsion selon la revendication 1, caractérisé en ce que les corps partiels (10) sont formés par des particules de matière plastique.

5. Dispositif amortisseur de torsion selon la revendication 4, caractérisé en ce que les particules de matière plastique sont formées de PTFE.

6. Dispositif amortisseur de torsion selon l'une des revendications 2 à 5, caractérisé en ce que les particules sont exécutées essentiellement sous forme de billes et ont un diamètre mesurant de 25µm à 500µm.

7. Dispositif amortisseur de torsion selon l'une des revendications 2 à 6, caractérisé en ce que les particules présentent à l'intérieur de la bague de guidage (9) une répartition essentiellement homogène.

8. Dispositif amortisseur de torsion selon l'une des revendications 2 à 7, caractérisé en ce que la bague de guidage (9) est formée par des particules dans une proportion de 10 à 90 pour cent volumétrique.

9. Dispositif amortisseur de torsion selon l'une des revendications 1 à 8, caractérisé en ce que la bague de guidage (9) et le premier corps élastique (5) sont exécutés de manière à se confondre et en ce que des particules sont intercalées seulement dans la bague de guidage (9).
